# EUROPÄISCHE PATENTANMELDUNG

(11) **EP 4 513 741 A1**
(43) Veröffentlichungstag der Anmeldung: **26.02.2025**
(21) Anmeldenummer: 24194625.0
(22) Anmeldetag: 14.08.2024
(51) Int. Cl.: H02P 5/00, H02P 21/05, H02P 21/22

(54) **MEHRMOTORENUMRICHTER FÜR MEHRERE MOTOREN UND DETEKTIONSVERFAHREN ZUM DETEKTIEREN DER VERSCHIEBUNGEN DER DREHZAHLEN DER MOTOREN**

(30) Priorität: 21.08.2023 DE 102023122262
(71) Anmelder: ebm-papst Mulfingen GmbH & Co. KG, 74673 Mulfingen (DE)
(72) Erfinder: Schroth, Dr. Sebastian, 74635 Kupferzell (DE); Stoll, Benedikt, 74834 Elztal-Neckarburken (DE)
(74) Vertreter: Staeger & Sperling Partnerschaftsgesellschaft mbB

(57) **Zusammenfassung**

Die Erfindung betrifft ein Regelsystem (1) umfassend einen Mehrmotorenumrichter (PWR) zum geregelten Parallelbetrieb einer Anzahl von n EC-Motoren (M1, ..., Mn), deren jeweilige Rotorlage jeweils sensorlos erfasst wird und vom gemeinsamen Umrichter angesteuert wird.

## Beschreibung

Die Erfindung betrifft ein Verfahren sowie einen sensorlosen Mehrmotorenumrichter zum Parallelbetrieb von wenigstens zwei, insbesondere mehrerer Motoren sowie ein Regelungsverfahren zum Betreiben der zwei oder mehrerer Motoren an einem gemeinsamen Mehrmotorenumrichter, insbesondere mit der Fähigkeit die Rotorlagen bzw. Verschiebungen der Drehzahlen der Motoren zu detektieren und zu regeln.

Zum sensorlosen bzw. rotorlagegeberfreien Betrieb eines elektrisch kommutierten Motors (PMSM / EC-Motor) an einem Umrichter werden in der Regel die an den Klemmen des Motors angelegten Spannungen sowie die in den Motorphasen fließenden Ströme in geeigneter Art und Weise erfasst und ausgewertet, um die Rotorlage zu bestimmen und den Motor entsprechend zu kommutieren. Im Stand der Technik ist aber keine zufriedenstellende Lösung bekannt, um zwei oder mehrere solcher Motoren (PMSM /EC-Motor) an einem einzigen Umrichter zu betreiben. Wenn in der nachfolgenden Beschreibung von Motoren gesprochen wird, sind sensorlos gesteuerte PMSM-Motoren bzw. sensorlos geregelte EC-Motoren gemeint.

Aus der KR 101 687 556 B1 ist eine Druckschrift bekannt, die sich auf eine Motorantriebsvorrichtung für zwei Motoren bezieht. Die Motorantriebsvorrichtung gemäß einer Ausführungsform dieser Druckschrift umfasst einen Wechselrichter, der eine Anzahl passender Schaltelemente umfasst und einen ersten Motor und einen zweiten Motor mit Wechselstrom versorgt, indem er Gleichstrom durch Schalten der Schaltelemente in Wechselstrom umwandelt, sowie eine Steuereinheit, die den Wechselrichter steuert. Die Steuereinheit stellt einen Sollwert für den magnetischen Flussstrom entsprechend einer Drehzahldifferenz oder einer Phasendifferenz des ersten Motors und des zweiten Motors ein und steuert den Wechselrichter auf der Grundlage eines Schaltsteuersignals, das auf dem eingestellten Sollwert für den magnetischen Flussstrom basiert. Dementsprechend kann ein Drehzahlfehler reduziert werden, wenn mehrere parallel geschaltete Motoren gleichzeitig gesteuert werden.

In der DE 10 2018 124 209 A1 ist ein weiteres Konzept des vorliegenden Anmelders beschrieben. Hierbei arbeitet das System mit drei Strommessungen pro Motor. Diese werden genutzt um einen Beobachter pro Maschine zu implementieren und so die Drehzahl und den Drehwinkel des jeweiligen Systems zu bestimmen. Zusätzlich wird ein Referenz-Koordinatensystem (KOS) definiert auf dessen Basis die Regelung arbeitet. Dies kann eines der beiden Motor-KOS sein oder das Inverter-KOS, welches sich auf Basis der Summenströme der Motoren ergibt. Um dieses KOS zu ermitteln wird ein zusätzlicher, nämlich weiterer (dritter) Beobachter benötigt. Ist das System nun über die Beobachter vollbestimmt, so lässt sich eine Regelung samt Stabilisierungsregler aufbauen, welcher auf Basis der Drehzahl- und Winkelinformation der einzelnen Motoren eine d-Stromkomponente aufschaltet. Um Wiederholungen zu einzelnen strukturellen Bausteinen und Komponenten zu vermeiden, wird darauf verwiesen, dass ein Fachmann diese Informationen bereits aus dieser genannten Druckschrift kennt. Eine Grundidee des darin beschriebenen Konzeptes besteht darin, dass zum rotorlagegeberfreien Parallelbetrieb mehrerer, wenigstens zweier, elektrisch kommutierter Motoren an einem gemeinsamen Umrichter für jeden der angeschlossenen Motoren eine separate Erfassung der Phasenströme erfolgt. Darüber hinaus wird jedoch nur eine einzige Spannungserfassung je Umrichterausgangsphase benötigt, da durch den Parallelbetrieb der Motoren, an allen Motoren dieselbe Klemmenspannung anliegt. Alternativ ist auch denkbar, dass die Klemmenspannung nicht erfasst, sondern aus den vom Controller ausgegebenen Aussteuergraden berechnet werden kann. Ein wesentlicher Unterschied des dort offenbarten Mehrmotoren-Umrichters zu einem herkömmlichen Umrichter besteht in der Erfassung und Verarbeitung der Messsignale zur Rotorlagebestimmung von mehreren Motoren, wobei hierzu für jeden am Mehrmotorenumrichter angeschlossenen Motor eine separate Stromerfassung erfolgt.

Die Erfindung geht von folgender Ausgangslage aus. Ein Inverter weist am Ausgang eine Stromerfassungsschaltung auf, mit der der vom Inverter in ein System aus mehreren Motoren fließende Strom erfasst werden kann. Mittels aus der Literatur bekannter Verfahren wird dann für das System aus mehreren Motoren (vorzugsweise PMSM) die Rotorlage des Gesamtsystems erfasst. Dieses ist dabei nicht zwingend identisch mit den einzelnen Rotorlagen der Motoren im Gesamtsystems. Des Weiteren kann zunächst keine Aussage über die Lage eines einzelnen Motors getroffen werden.

Zum Einregeln der Drehzahl oder Drehmoment eines solchen Gesamtsystems kann bspw. ein bekanntes feldorientiertes FOC-Regelverfahren eingesetzt werden. Die hohe Komplexität der FOC erfordert einen programmierbaren Baustein, der die Vektormathematik der Clarke- und Park-Transformationen, die der FOC zugrunde liegt, effizient handhaben kann.

Es kann beispielweise auch ein Verfahren zum Betrieb mehrerer Motoren an einem gemeinsamen Umrichter, wie in der DE 10 2018 124 209 A1 beschrieben, verwendet werden. Nachteilig hierbei ist die benötigte Stromerfassung aller Motorphasen und die entsprechende Anzahl an benötigten Beobachtern. Durch die Verwendung des Inverterausgangsstroms können diese zwar prinzipiell verringert werden. Hierbei kommt es allerdings zu Pendelbewegungen der Motoren zueinander, die vom Inverter und dem Gesamtsystem nicht erkannt werden können, was ebenfalls als Nachteil zu betrachten ist. Des Weiteren ist sicherzustellen, dass jeder Motor in einem sicheren Betriebspunkt arbeitet.

Ein wesentlicher Unterschied des erfindungsgemäßen Mehrmotoren-Umrichters besteht darin, dass eine Detektionseinrichtung bzw. Detektionsverfahren ergänzt ist, welches die Möglichkeit bietet die Rotorlage einzelner Motoren innerhalb des Gesamtsystems zu erfassen und entsprechend einzuregeln.

Es ist daher Aufgabe der vorliegenden Erfindung eine verbesserte Lösung zum Betreiben mehrerer Motoren an einem Umrichter bereit zu stellen, die sich kostengünstig realisieren und möglichst universell einsetzen lässt und bei der die Drehzahlverschiebung zweier Motoren beim rotorlagegeberfreien Parallelbetrieb von mehreren, wenigstens zwei, elektrisch kommutierten Motoren (PMSM / EC-Motor) an einem gemeinsamen Umrichter unter Verwendung einer möglichst geringen Anzahl von Stromsensoren bei geringer Rechenleistung vorzuschlagen.

Die Erfindung wird anhand der Merkmale von Anspruch 1 gelöst.

Ein Grundgedanke der Erfindung besteht darin, durch (mindestens) eine zusätzliche Stromerfassungseinrichtung bzw.- schaltung den Phasenstrom für den entsprechenden Motor zu messen und dadurch die ansonsten erforderlichen Beobachter einzusparen. Auf Basis der Strominformationen können Pendelungen als auch der Zustand eines Systems aus mehreren Motoren erkannt werden und dann durch einen Stabilisierungsregler entsprechend ausgeregelt werden.

Bestimmte Teile der Regelung sind in der DE 10 2018 124 209 A1 ausführlich beschrieben und anhand eines Blockschaltbildes mittels eines konkreten Ausführungsbeispiels erläutert, so dass auf eine erneute detaillierte Beschreibung verzichtet wird. Aus der DE 10 2018 124 209 A1 ist bereits ein Regelsystem umfassend einen Mehrmotorenumrichter (PWR) zum gesteuerten Parallelbetrieb einer Anzahl an n EC-Motoren (M1, ..., Mn) bekannt, deren jeweilige Rotorlage jeweils sensorlos erfasst wird.

Erfindungsgemäß sind die beiden folgende Konzepte als bevorzugte Lösungen zur Detektion der Rotorlageverschiebung vorgesehen. Entweder die Detektion der Systemschwingung (Pendelung der Motoren) auf Basis der Phasenstrominformation mittels d-q-Transformation und alternativ auf Basis der direkten rotorlageabhängigen Stromabtastung.

Bei der ersten Variante erfolgt eine Regelung mit einer sensorlosen Rotorlagebestimmung (RLU), wobei als Bezugskoordinatensystem der Winkel der Rotorlagebestimmung RLU verwendet wird. Die Solldrehfrequenz wird durch einen festen Sollwert ωₛₒₗₗ vorgegeben. Der Drehzahlregler stellt daraufhin auf Basis der Differenz zwischen Drehzahlsollwert ωₛₒₗₗ und der Drehzahl der sensorlosen Rotorlagebestimmung ω_{U} einen Soll-q-Strom I_{q_soll} der durch den d-q-Strom-Regler in einer Spannungsstellgröße U_{q} resultiert. Die d-Sollkomponente des Stroms I_{d_soll} wird durch den Stabilisierungsregler vorgegeben auf dessen Basis der d-q-Strom-Regler die Spannungsstellgröße U_{d} ermittelt. Per Clarke-Park-Transformation und anschließendem PWM-Modulator werden dann die Schaltbefehle auf den Umrichter gegeben.

Hierzu wird demzufolge eine Regelsystem vorgeschlagen, umfassend einen Mehrmotorenumrichter (PWR) zum gesteuerten Parallelbetrieb einer Anzahl an n EC-Motorenumfassend
a. ein Stabilisierungssystem umfassend einen Stabilisierungsregler,
b. einen d-q-Stromregler, dem als Regelgröße von dem eingangsseitig angeordneten Stabilisierungsregler zumindest die Sollstromgröße I_{d,Soll} in Raumzeigerdarstellung eingegeben wird, auf dessen Basis der d-q-Strom-Regler die Spannungsstellgröße U_{d} ermittelt,
c. wobei wenigstens eine oder mehrere Stromerfassungsschaltungen vorgesehen ist bzw. sind, um den Phasenstrom eines bzw. mehrerer der n EC-Motoren, um damit auf Basis der erfassten Strominformationen Stromschwingungen und/oder Pendelungen zu detektieren und mittels des Stabilisierungsregler das Mehrmotorensystem über die Sollstromgröße I_{d,Soll} in einen stabilen Zustand zu regeln.

In einer bevorzugten Ausgestaltung der beiden Konzepte ist vorgesehen, dass eingangsseitig am Stromregler ferner noch ein Drehzahlregler vorgesehen ist, zur Bereitstellung mindestens der Soll-Drehzahl (und ggf. weiterer Kenngrößen, wie diese in den nachfolgend dargestellten Ausführungsbeispiele in den Blockschaltbildern gezeigt ist).

In der erstgenannten Ausführungsform, die eine Grundwellendetektion in den Stromsignalen nutzt, weist das Stabilisierungssystem einen Transformator auf, um per Clarke-Park-Transformation aus wenigstens zwei erfassten Phasenströmen und der Rotorlage die Sollstromgröße I_{d,Soll} zu bestimmen.

In dem alternativen Lösungskonzept mit der rotorlageabhängigen Stromabtastung ist vorgesehen, dass zur Ermittlung der Pendelungen der Wechselanteil des Stromsignals erfasst wird und dem Stromregler, vorzugsweise mittels Filterung als Sollwert I_{d,Soll} vorgegeben wird, um dem nacheilenden Motor ein größeres und dem vorauseilenden Motor ein reduziertes Drehmoment einzuprägen, um dadurch die ermittelte Pendelung zu reduzieren.

Ein weiterer Aspekt der vorliegenden Erfindung betrifft neben dem beschriebenen Regelungssystem auch ein Verfahren zum Betreiben von n EC-Motoren mit n≥2 im Parallelbetrieb an dem gemeinsamen Mehrmotorenumrichter (PWR) (für die erste Ausführungsform) mit zumindest den folgenden Schritten:
- Vorgabe einer Solldrehfrequenz durch einen festen Drehzahlsollwert ωₛₒₗₗ
- Einstellen eines Soll-q-Strom I_{q_soll} auf Basis der Differenz zwischen Drehzahlsollwert ωₛₒₗₗ und der Drehzahl der sensorlosen Rotorlagebestimmung ω_{U}, wobei aus dem Soll-q-Strom I_{q_soll} vom d-q-Strom-Regler eine Spannungsstellgröße U_{q} erzeugt wird,
- Erfassen von wenigstens einer, vorzugsweise mehreren Phasenströmen (I_{M1, u,} I_{M2,V}, ...) mit einer separaten Stromerfassungseinrichtung, wobei das Stabilisierungssystem mittels Clarke-Park-Transformation aus wenigstens zwei erfassten Phasenströmen (I_{M1, u}, I_{M2,V}, ...) und der Rotorlage die Sollstromgröße I_{d,soll} bestimmt,

- Zuführen der transformierten Größen der Grundwellendetektion F zur Weiterverarbeitung;
- Ermittlung der Spannungsstellgröße U_{d} auf Basis der d-Soll-Stromgröße I_{d_Soll}, um diese per Clarke-Park-Transformation zu transformieren und anschließend via einem PWM-Modulator als Schaltbefehle auf den Mehrmotorenumrichter (PWR) zum gesteuerten Parallelbetrieb der EC-Motoren (M1, ..., Mn) zu geben.

Bei der zweiten Ausführungsform erfolgt ein gleichzeitiges oder nahezu gleichzeitiges, rotorlageabhängiges Messen der Phasenströme am Mehrmotorenumrichter (PWR) oder an dem/den Motoren bei bestimmten mechanischen und/oder elektrischen Winkeln der geschätzten Rotorlage des Mehrmotorensystems mit den folgenden weiteren Schritten:
- Ermitteln ob eine Pendelung der Motoren in dem Mehrmotorensystem vorliegt, indem die Stromsignale bezüglich ihres Wechselstromanteils anaylsiert werden, und falls ja,
- Stabilisierung der Motoren indem entsprechende Schaltbefehle an den Mehrmotorenumrichter (PWR) bzw. Stellung der Ausgangsspannungen an die Motoren gegeben werden, um der Pendelung entgegenzuwirken oder diese zu beseitigen.

Bevorzugt ist dabei vorgesehen, dass bei einem Lastsprung im Betrieb der mehreren Motoren, zum Kompensieren der Pendelung ferner ein Aufschalten des ausgefilterten Schwingungsterms erfolgt (bei der transformierten Ausführungsvariante).

Die Stromerfassung zum Erfassen der Phasenströme soll bevorzugt direkt an den Motoren erfolgen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: ein Blockschaltbild eines bekannten Regelverfahrens eines Mehrmotorenreglers, jedoch ergänzt mit einem modifizierten Stabilisierungsregler;
- Fig. 2: ein Blockschaltbild eines Stabilisierungsreglers zur Verwendung bei dem erfindungsgemäß modifizierten Mehrmotorenregler und
- Fig. 3: ein Blockschaltbild eines alternativen Stabilisierungsreglers zur Verwendung bei dem erfindungsgemäß modifizierten Mehrmotorenregler.

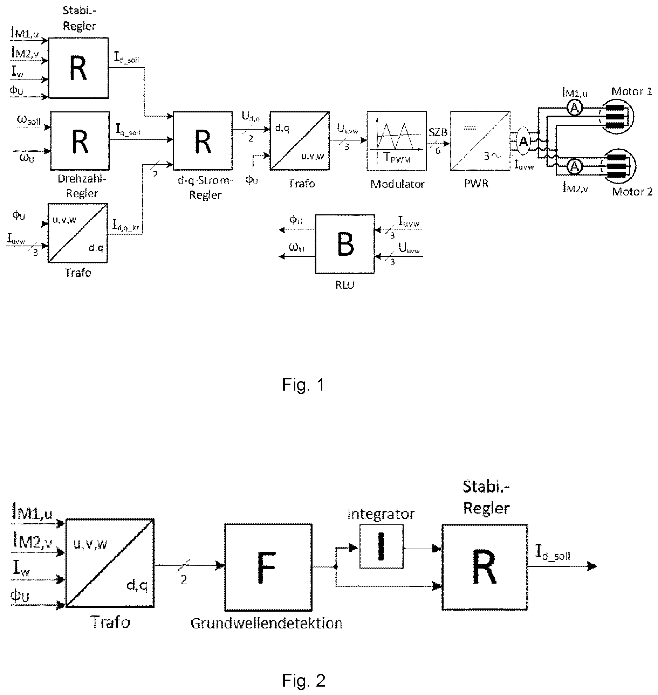

Im Folgenden wird die Erfindung anhand der Erläuterungen zu den Ausführungsformen mit Bezug auf die Figuren 1 bis 3 näher erläutert, wobei gleiche Bezugszeichen in den Figuren auf gleiche strukturelle und/oder funktionale Merkmale hinweisen.

Die Figur 1 zeigt ein Regelsystem 1 umfassend einen Mehrmotorenumrichter PWR zum geregelten Parallelbetrieb einer Anzahl von zwei EC-Motoren M1 (Motor 1), M2, (Motor 2) dargestellt..

Hierzu ist eine Erfassungseinrichtung RLU zur Ermittlung wenigstens der Rotorlage und Drehzahl eines fiktiven Motors am Umrichterausgang mit Hilfe der zuvor gemessener Phasenströme bzw. des Summenstroms I_{u,v,w} und der Klemmenspannung U_{u,v,w} der beiden EC-Motoren vorgesehen. Die Erfassungseinrichtung RLU ist somit insbesondere ausgebildet die Rotorlage ϕ_{U} zu erhalten, wobei als Eingangsgröße der Summenstrom I_{uvw} und für die Ermittlung der Größen Rotorlage ϕ_{U} und Drehzahl ω_{U} auch die Klemmenspannung U_{uvw} verwendet wird.

Es ist in beiden Ausführungsformen eine der Regelungs- und Transformationseinrichtung nachgeschaltete Regelungseinrichtung vorgesehen, der die von der Transformationseinrichtung jeweils ausgegebenen Spannungsgrö-βen U_{d}, U_{q} und Stromgrößen I_{d,q_ist} zugeführt werden, um daraus Schaltbefehle SZB für den Mehrmotorenumrichter PWR zum Betrieb der beiden Motoren zu generieren.

Die Regelungs- und Transformationseinrichtung weist einen Clarke-Park-Transformator TP zum Transformieren von der Rotorlage ϕ_{U} und Summenstrom I_{uvw} in eine d-q-Stromgröße I_{d,q_ist} in Raumzeigerdarstellung für die Regelungseinrichtung auf.

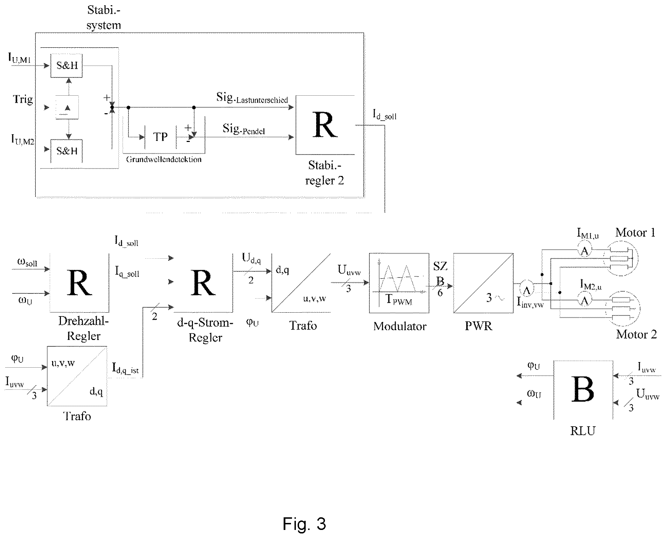

Die beiden Ausführungsformen sind durch die Figur 1 gleichermaßen darstellbar, da der Unterschied in dem Stabilisierungsregler Rs (siehe Figuren 2 und 3) besteht.

In der Figur 2 findet sich ein Blockschaltbild eines ersten Ausführungsbeispiels eines Stabilisierungssystems mit einem Stabilisierungsregler RS zur Verwendung bei dem erfindungsgemäß modifizierten Mehrmotorenregler PWR.

Nach der Transformation der gezeigten Eingangsgrößen einschließlich der verwendeten Phasenströme für die beiden Motoren M1, M2, werden diese der Grundwellendetektion F zugeführt und weiter verarbeitet (mit herkömmlichen mathematischen Algorithmen und Methoden, die demzufolge nicht näher beschrieben werden). Der Stabilisierungsregler Rs stellt die Stromgröße I_{d_soll} bereit.

In der Figur 3 ist eine alternative Stabilisierungslösung gezeigt, welche das Delta zwischen den gemessenen Motorphasen ermittelt und auf dessen Basis die Sollgröße des d-Stroms bestimmt. Durch die Sample & Hold Blöcke werden die Stromwerte abgetastet und daraufhin die Differenz gebildet. Diese Differenz wird daraufhin direkt an den Stabilisierungsregler Rs übergeben. Zusätzlich wird noch die Pendelfrequenz der Motoren durch die Grundwellendetektion (TP) ausgefiltert und dem Stabilisierungsregler Rs zur Verfügung gestellt.

Auch hier stellt der Stabilisierungsregler Rs die Stromgröße I_{d_soll} bereit. Allerdings erfolgt hier eine Stromabtastung. Die Verarbeitung ergibt sich aus dem Blockschaltbild.

Bei der aktuell vorgestellten Variante wurde die Anzahl der benötigten Beobachter auf lediglich einen Beobachter reduziert. Dies ist möglich, da für die Stabilisierung des Systems lediglich die Schwingungsinformation der mechanischen Teilkomponenten bekannt sein muss. Die nun vorgestellte Umsetzung ermittelt diese Information direkt aus dem Strom ohne mehrere Messstellen und Beobachter zu benötigen.

Zur Implementierung der ersten Ausführungsvariante werden lediglich Messstellen am Summenstrom als auch an insgesamt zwei unterschiedlichen Phasen der beiden Motoren benötigt. Auf Basis der Summenstrommessung kann ein Beobachter für das Inverter-KOS implementiert werden. Auf Basis der anderen beiden Messungen kann in Kombination mit der Summenstromerfassung der Schwingungsanteil der Motoren auf Basis einer einfachen Clarke-Park-Transformation ermittelt werden. Dies dient als Grundinformation für den Sollwert des d-Stromreglers.

Die zweite Ausführungsvariante nutzt die Stromdifferenz zwischen zwei gleichen Motorphasen, um den Schwingungstherm zu bestimmen. Hierbei ist also keine Clarke-Park Transformation mehr nötig, jedoch eine Strommessung in zwei gleichen Motorphasen. Es wird darauf hingewiesen, dass nicht zwingend in den gleichen Phasen gemessen werden muss. Allerdings sind bei unterschiedlichen Phasen durch mathematische Verarbeitung der Daten (z.B. Zwischenspeicherung, Synchronisierung) dann sicherzustellen, dass bspw. immer die max./min bzw. die um 60/120° versetzten Signale einer Phase verglichen werden

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Regelsystem (1) umfassend einen Mehrmotorenumrichter (PWR) zum gesteuerten Parallelbetrieb einer Anzahl an n EC-Motoren (M1, ..., Mn), wobei n ≥ 2, umfassend
a. ein Stabilisierungssystem umfassend einen Stabilisierungsregler (Rs),
b. einen d-q-Stromregler, dem als Regelgröße von dem eingangsseitig angeordneten Stabilisierungsregler (Rs) zumindest die Sollstromgröße I_{d,Soll} in Raumzeigerdarstellung eingegeben wird, auf dessen Basis der d-q-Strom-Regler die Spannungsstellgröße U_{d} ermittelt,
c. wobei wenigstens eine oder mehrere Stromerfassungsschaltungen vorgesehen ist bzw. sind, um den Phasenstrom eines bzw. mehrerer der n EC-Motoren (M1, ..., Mn), um damit auf Basis der erfassten Strominformationen Stromschwingungen und/oder Pendelungen zu detektieren und mittels des Stabilisierungsregler (Rs) das Mehrmotorensystem über die Sollstromgröße I_{d,Soll} in einen stabilen Zustand zu regeln.

2. Regelsystem (1) gemäß Anspruch 1, **dadurch gekennzeichnet, dass** eingangsseitig am Stromregler ein Drehzahlregler (R_{D}) vorgesehen ist, zur Bereitstellung mindestens der Soll-Drehzahl.

3. Regelsystem (1) gemäß Anspruch 1 oder 2, **dadurch gekennzeichnet, dass** das Stabilisierungssystem einen Transformator aufweist, um per Clarke-Park-Transformation aus wenigstens zwei erfassten Phasenströmen (I_{M1, u}, I_{M2,V}, ...) und der Rotorlage die Sollstromgröße I_{d,Soll} zu bestimmen.

4. Regelsystem (1) gemäß Anspruch 1, **dadurch gekennzeichnet, dass** zur Ermittlung der Pendelungen der Wechselanteil des Stromsignals erfasst wird und dem Stromregler, vorzugsweise mittels entsprechender Grundwellendetektion oder Filterung und Verstärkung als Sollwert I_{d,Soll} vorgegeben wird, um dem nacheilenden Motor ein größeres und dem vorauseilenden Motor ein reduziertes Drehmoment einzuprägen, um dadurch die ermittelte Pendelung zu reduzieren.

5. Verfahren zum Betreiben von n EC-Motoren mit n≥2 im Parallelbetrieb an einem gemeinsamen Mehrmotorenumrichter (PWR) mit einem Regelsystem (1) gemäß Anspruch 3, mit zumindest den folgenden Schritten:
a. Vorgabe einer Solldrehfrequenz durch einen festen Drehzahlsollwert ωₛₒₗₗ
b. Einstellen eines Soll-q-Strom I_{q_soll} auf Basis der Differenz zwischen Drehzahlsollwert ωₛₒₗₗ und der Drehzahl der sensorlosen Rotorlagebestimmung ω_{U}, wobei aus dem Soll-q-Strom I_{q_soll} vom d-q-Strom-Regler eine Spannungsstellgröße U_{q} erzeugt wird,
c. Erfassen von wenigstens einer, vorzugsweise mehreren Phasenströmen (I_{M1, u}, I_{M2,V}, ...) mit einer separaten Stromerfassungseinrichtung, wobei das Stabilisierungssystem mittels Clarke-Park-Transformation aus wenigstens zwei erfassten Phasenströmen (I_{M1, u}, I_{M2,V}, ...) und der Rotorlage die Sollstromgröße I_{d,Soll} bestimmt,
d. Ermittlung der Spannungsstellgröße U_{d} auf Basis der d-SollStromgröße I_{d_Soll}, um diese per Clarke-Park-Transformation zu transformieren und anschließend via einem PWM-Modulator als Schaltbefehle auf den Mehrmotorenumrichter (PWR) zum geregelten Parallelbetrieb der EC-Motoren (M1, ..., Mn) zu geben.

6. Verfahren zum Betreiben von n EC-Motoren mit n≥2 im Parallelbetrieb an einem gemeinsamen Mehrmotorenumrichter (PWR) mit einem Regelsystem (1) gemäß Anspruch 4, mit zumindest den folgenden Schritten:
a. Gleichzeitges oder nahezu gleichzeitiges, rotorlageabhängiges Messen der Phasenströme am Mehrmotorenumrichter (PWR) oder an dem/den Motoren bei bestimmten mechanischen und/oder elektrischen Winkeln der geschätzten Rotorlage des Mehrmotorensystems;
b. Ermitteln ob eine Pendelung der Motoren in dem Mehrmotorensystem vorliegt, indem die Stromsignale bezüglich ihres Wechselstromanteils anaylsiert werden, und falls ja,
c. Stabilisierung der Motoren indem entsprechende Schaltbefehle an den Mehrmotorenumrichter (PWR) bzw. Stellung der Ausgangsspannungen an die Motoren gegeben werden, um der Pendelung entgegenzuwirken oder diese zu beseitigen.

7. Verfahren gemäß Anspruch 6, wobei bei einem Lastsprung im Betrieb der mehreren Motoren, so wird zum Kompensieren der Pendelung und zum Stabilisieren des Systems eine extrahierte Schwingungsfrequenz verwendet.

8. Verfahren gemäß einem der Ansprüche 5 bis 7, wobei die Stromerfassung mindestens eine Messung an der Motorphase eines Motors und zusätzlich entweder eine Summenstrommessung oder eine weitere Strommessung an einem weiteren Motor vorsieht.

9. Verfahren gemäß einem der Ansprüche 5 bis 7, wobei die Stromerfassung direkt an den Motoren erfolgt.

10. Verfahren gemäß einem der vorhergehenden Ansprüche, wobei bei Detektion eines Phasenausfalls eine Abschaltung erfolgen kann.
